# EUROPÄISCHE PATENTSCHRIFT

(11) **EP 1 459 623 B1**
(45) Veröffentlichungstag und Bekanntmachung des Hinweises auf die Patenterteilung: **11.08.2010**
(21) Anmeldenummer: 04004760.7
(22) Anmeldetag: 02.03.2004
(51) Int. Cl.: A01K 1/00

(54) **Abtrennvorrichtung für Stallboxen zur Haltung von Tieren**
Separation device for stalls of a stable
Dispositif de séparation des stalles

(30) Priorität: 20.03.2003 DE 20304473 U; 17.04.2003 DE 20306176 U
(43) Veröffentlichungstag der Anmeldung: 22.09.2004
(73) Patentinhaber: Zimmermann Stalltechnik GmbH, 88436 Oberessendorf (DE)
(72) Erfinder: Zimmermann, Erwin, 88436 Oberessendorf (DE)
(74) Vertreter: Kiessling, Christian

(56) Entgegenhaltungen:
- EP-A- 0 979 604
- EP-A1- 0 438 191
- WO-A-99/56529
- DE-A1- 3 413 653
- DE-U1- 29 921 725
- GB-A- 2 324 700

## Beschreibung

Die Erfindung betrifft eine Abtrennvorrichtung für Stallboxen zur Haltung von Tieren wie Kühen, Rindern, Schweinen oder dergleichen mit einem Trennrohr und zwei Abstützrohren für die Bodenbefestigung, wobei die beiden Abstützrohre durch die Endbereiche und das Trennrohr durch den dazwischen liegenden Rohrbereich des einstückig gebogenen Rohres gebildet sind, das Trennrohr wenigstens eine Umkehrbiegung aufweist und zu einem Trennrahmen oder Trennbügel gebogen ist, so dass es wenigstens zwei voneinander beabstandete, auf unterschiedlichen Höhen liegenden Holme aufweist, wobei ein Seitenversatz für die Abstützrohre durch entsprechende Biegung des einstückigen Rohres vorgesehen ist.

Dein Abtrennvorrichtung der eingangs genannten Art ist aus WO 99 56 529 bekannt.

Ähnliche Abtrennvorrichtungen sind beispielsweise in der DE 195 16 579 oder DE 195 16 102 beschrieben. Beide Druckschriften zeigen Trennrahmen, bei denen eine gewisse Nachgiebigkeit durch eine vergleichsweise aufwendige Anordnung unter Verwendung von Rückstellblöcken aus elastischem Material erzielt wird. Durch die vielen Einzelteile und die vielen Verbindungsstellen nicht nur in der nachgiebigen Aufhängung sondern auch in der Rohrkonstruktion selbst wird ein hoher Fertigungsaufwand erforderlich. Darüber hinaus ergibt sich vor allem an den Verbindungsstellen der verschiedenen Rohrstücke eine besonders hohe Bruchgefahr.

Aus DE 299 21 725 U1 ist eine aus einem Befestigungsbereich und einem Trenn- und Abstützungsrohr bestehende Liegeboxenabtrennung bekannt, bei das Querrohr oberhalb der Widerristhöhe verläuft und bei der sich der Befestigungsbereich außerhalb des Liegebereichs befindet, um diesen Störfaktor beim Liegen und Aufstehen eines Tieres auszuschließen.

Aus DE 34 13 653 ist eine Trennvorrichtung für die Tierhaltung in Anbindeständen bekannt, umfassend einen in U-Form gebogenen Trennrahmen, der mit einer Stützvorrichtung für einen zum Anbinden des Tieres dienenden Querträger verbunden ist, wobei die beiden Schenkel des U-förmigen Trennrahmens zur Verankerung des Trennrahmens im Stallboden dienen und die Stützvorrichtung für den Querträger mit ihrem unteren Ende an dem die beiden Schenkel des U-förmigen Trennrahmens verbindenden Rahmenabschnitt verschiebbar befestigt ist, um Bauteile zu schaffen, die einfach herstellbar sind, deren Zusammenbau einfach durchführbar ist und die leicht voneinander lösbar sind und daher an verschiedene Anbindesysteme und an die örtlichen Gegebenheiten leicht anzupassen sind.

Aufgabe der Erfindung ist es, eine Abtrennvorrichtung zu schaffen, die einfacher herstellbar ist und bei der eine Bruchgefahr reduziert ist.

Für eine Abtrennvorrichtung der eingangs genannten Art wird diese Aufgabe erfindungsgemäß dadurch gelöst, dass die Enden der jeweils gleich langen Abstützrohre im Bereich einer bodenseitigen Halterung nebeneinander angeordnet sind.

Bevorzugte Ausführungsformen der Erfindung sind Gegenstand der Unteransprüche.

Bei der erfindungsgemäßen Abtrennvorrichtung wird durch die Merkmale, dass die Enden der jeweils gleich langen Abstützrohre im Bereich einer bodenseitigen Halterung nebeneinander angeordnet sind, erreicht, dass aufwendige Einzelteile und Verbindungsstellen gegenüber den bekannten Vorrichtungen entfallen. Die erfindungsgemäße Abtrennvorrichtung ist aus diesem Grund besonders einfach herstellbar und besonders stabil, so dass eine Bruchgefahr reduziert ist.

Darüber hinaus bildet die erfindungsgemäße Abtrennvorrichtung eine Möglichkeit, durch entsprechende Formgebung beim Biegen des Rohres eine nachgiebige Form für die Abtrennung vorzusehen, so dass auch die Vorteile einer Abtrennvorrichtung gemäß dem oben angeführten Stand der Technik, d.h. eine Verminderung der Verletzungsgefahr für die Tiere realisiert werden kann.

Eine solche nachgiebige Form kann beispielsweise dadurch erzielt werden, dass ein von unten nach oben verlaufendes Stützrohr in seitlicher Richtung zur Bildung eines Trennrohrs oder Trennrahmens abgebogen wird. Hierdurch ist eine Ausnutzung der Elastizität eines Metallrohrs, wie beispielsweise eines Stahlrohrs möglich, um die gewünschte Nachgiebigkeit der Abtrennung ohne weitere aufwendige Zusatzmaßnahmen zu erzielen.

Vorteilhafterweise wird das Trennrohr hierbei zu einem Trennrahmen gebogen, so dass es wenigstens zwei voneinander beabstandete auf unterschiedlichen Höhen liegende Holme umfasst. Hierdurch wird ein Trennrahmen realisierbar, der die gewünschte Funktion in herkömmlicher Weise auf unterschiedlichen Höhen erfüllt, so dass eine zuverlässige Abtrennung möglich ist, ohne dass die Gefahr besteht, dass ein Tier oberhalb oder unterhalb des Trennrohres die Abtrennung überwindet.

### zwei oder mehr Abstützrohre (10, 11) vorgesehen sind.

Um einen solchen Trennrahmen oder Trennbügel zu verwirklichen, wird das Trennrohr vorzugsweise so gebogen, dass es wenigstens eine Umkehrbiegung aufweist. Mittels einer Umkehrbiegung können die beiden voneinander beabstandeten Holme als Rohrabschnitte problemlos auf unterschiedlicher Höhe angeordnet werden.

Das Trennrohr kann hierbei zu einem offenen Trennbügel oder zu einem in sich geschlossenen Trennrahmen gebogen werden, wobei das Trennrohr wenigstens in einem Endbereich in wenigstens ein Abstützrohr übergeht, das bodenseitig befestigbar. Das oder die Abstützrohre sind dabei in der Lage, die gesamte Trennvorrichtung zu tragen.

In einer Weiterbildung der Erfindung werden zwei Abstützrohre vorgesehen, wodurch sich die Stabilität der Abtrennvorrichtung erhöht.

In dieser Ausführungsform der Erfindung werden die beiden Abstützrohre bevorzugt durch beide Endbereiche und das Trennrohr durch den dazwischen liegenden Rohrbereich des einstückigen Rohres gebildet, aus dem die Abtrennvorrichtung gebogen ist.

Dies bietet bei guter Stabilität den Vorteil, dass die gesamte Abtrennvorrichtung im Aufenthaltsbereich des Tieres bzw. der Tiere keinerlei Ecken und Kanten, sondern lediglich durch Biegen entstandene Rundungen aufweist.

Darüber hinaus ist hierdurch im Übergang der beiden Endbereiche vom Trennrohr in die doppelten Abstützrohre die oben genannte Elastizität verbessert.

In einer besonderen Ausführungsform der Erfindung wird die Abtrennung so gebogen, dass das Trennrohr bzw. der daraus gebildete Trennbügel oder Trennrahmen und das oder die Abstützrohre in einer Ebene liegen. Dabei können auch beide Endbereiche des einstückig gebogenen Rohres als Abstützrohr verwendet werden, die entweder unmittelbar zueinander benachbart oder mit einem gewissen Abstand angeordnet werden. Die genaue Anordnung dieser Abstützrohre beeinflusst hierbei die Stabilität und Nachgiebigkeit der Trennvorrichtung.

In einer bevorzugten Ausführung der Erfindung werden jedoch die beiden durch Endbereiche des gebogenen Rohres gebildeten Abstützrohre nebeneinander bezogen auf die Längsrichtung der Abtrennvorrichtung angeordnet. Das Rohr ist damit nicht vollständig in einer Ebene gebogen, sondern weist einen gewissen Querversatz auf, so dass die beiden Endbereiche nebeneinander zu liegen kommen. Diese Anordnung weist eine besonders gute Flexibilität in vertikaler Richtung auf, da bei dieser Anordnung ein Nachgeben bzw. ein Durchbiegen der Abstützrohre ohne Verformung des dazwischen liegenden Trennrohres bzw. Trennbügels oder Trennrahmens möglich ist.

Eine erfindungsgemäße Trennvorrichtung ist mit geeigneten Halterungselementen ohne weiteres in der Wandmontage oder mit einer bodenseitigen Halterung in der Bodenmontage verwendbar. Hierdurch ist die Abtrennvorrichtung auch für Stalleinrichtungen geeignet, bei denen die erfindungsgemäße Stallbox beabstandet von einer Wand und somit ohne die Möglichkeit einer Wandmontage angeordnet wird.

Die bodenseitige Halterung wird vorzugsweise als Klemm- oder Steckhalterung ausgebildet, die das oder die endseitigen Abstützrohre der Abtrennvorrichtung verklemmt oder wenigstens teilweise formschlüssig aufnimmt.

In einer bevorzugten Ausführungsform werden hierzu ein oder mehrere Klemm- oder Steckhülsen vorgesehen, in die die endseitigen Abstützrohre der Abtrennvorrichtung einsteckbar und gegebenenfalls über entsprechende Klemmelemente, wie beispielsweise Schrauben oder dergleichen zu verklemmen bzw. zu verspannen sind.

Vorteilhafterweise wird die bodenseitige Befestigung außerhalb des Liegebereichs des Tieres vorgenommen, so dass das liegende Tier durch diese Abstützung nicht beeinträchtigt wird.

In einer bevorzugten Ausführungsform der Erfindung werden das oder die das oder die Abstützrohre bildende Rohrenden so gebogen, dass sie in montiertem Zustand im Wesentlichen vertikal verlaufen. Die Befestigung derartiger vertikaler Rohre ist mit minimalem Ausmaß von etwaigen bodenseitigen Befestigungselementen möglich, so dass die Tiere in ihrer Bewegungsfreiheit nicht oder nur unwesentlich durch derartige Befestigungselemente beeinträchtigt werden.

In einer anderen Ausführungsform der Erfindung können das oder die ein oder zwei Abstützrohre bildenden Rohrenden auch in im Wesentlichen horizontal verlaufender Richtung gebogen sein. Ein solches im Wesentlichen horizontal auslaufendes Rohrende bietet den Vorteil, dass es mit einfachen Bügeln am Boden zu verspannen ist.

Weiterhin wird bevorzugt eine vordere Begrenzung der Liegefläche vorgesehen, die beispielsweise in Form eines Bugholzes ausgebildet sein kann. Eine solche vordere Begrenzung stellt sicher, dass das oder die Tiere sich in dem dafür vorgesehenen Liegebereich ablegen und somit insbesondere auch beim Aufstehen in diesem Bereich verbleiben.

Um die Tiere auch beim Aufstehen in dem vorgesehenen Bereich zu halten, wird bevorzugt eine zusätzliche Nackenbegrenzung vorgesehen, die ein Vorwärtstreten der Tiere begrenzen soll.

Bevorzugt wird eine solche Nackenbegrenzung flexibel ausgebildet, um die Verletzungsgefahr für die Tiere beim Aufstehen zu reduzieren. Eine solche flexible Nackenbegrenzung kann beispielsweise durch ein elastisches Band oder ein elastisches Seil gebildet werden, es besteht jedoch auch die Möglichkeit, ein in der Länge nicht nachgiebiges, aber flexibles Material wie eine Kette, ein zugfestes Seil oder dergleichen durch entsprechend nachgiebige Randbefestigungen, beispielsweise gegen eine Feder oder dergleichen im gewünschten Sinne flexibel zu gestalten.

Die einzelnen Abtrennvorrichtungen können durch ein Aussteifungs- und Abgrenzrohr verbunden und damit auch versteift werden, wobei dieses Aussteifungs- und Abgrenzrohr vorteilhafterweise mit einer Auswölbung versehen wird, um eine gute Nacken- und/oder Rückenfreiheit zu gewährleisten.

Die Erfindung wird im Folgenden anhand eines Ausführungsbeispiels erläutert, das in den Figuren der Zeichnung dargestellt ist. Darin zeigen:
- Figur 1: eine Seitenansicht einer erfindungsgemäßen Abtrennvorrichtung,
- Figur 2: eine Seitenansicht einer zweiten Ausführungsform einer erfindungsgemäßen Abtrennvorrichtung,
- Figur 3: eine Vorderansicht auf einen Stallbereich mit erfindungsgemäßen Abtrennvorrichtungen,
- Figur 4: eine Draufsicht auf einen Stallbereich gemäß Figur 3,
- Figur 5: eine Draufsicht auf eine Montagekonsole zur Bodenmontage und
- Figur 6: eine Seitenansicht einer Montagekonsole gemäß Figur 5.

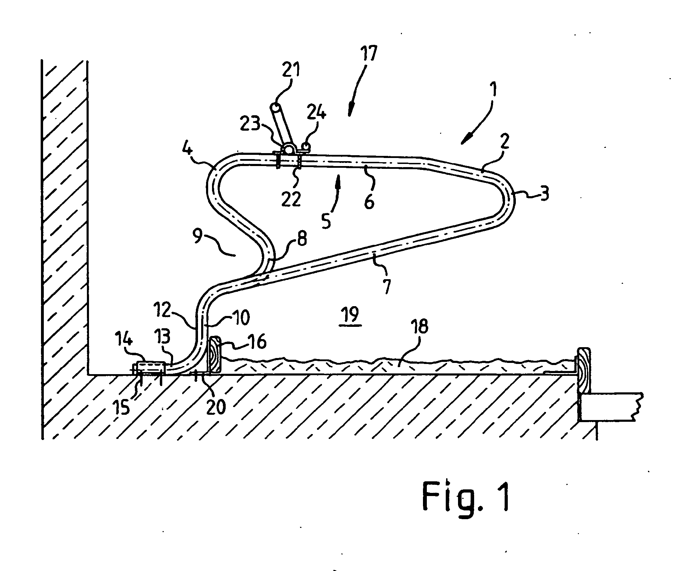

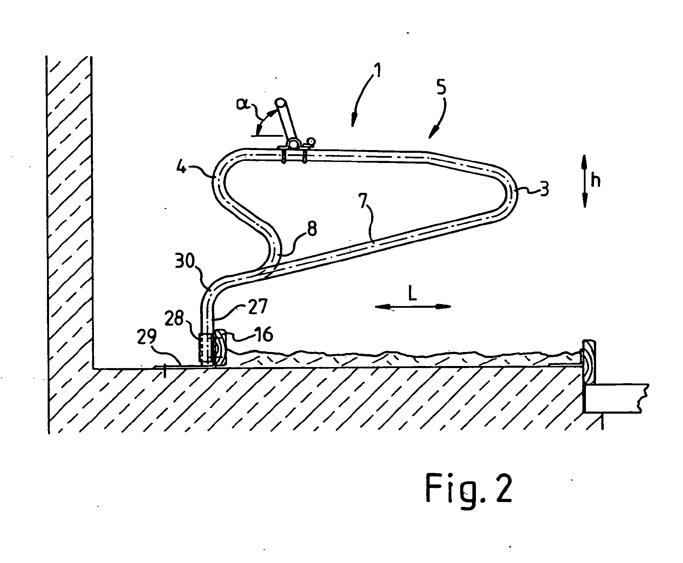

Die Figuren 1 und 2 zeigen jeweils eine erfindungsgemäße Abtrennvorrichtung 1, die aus einem einstückigen Rohr 2 gebogen ist. Der Mittelbereich des Rohrs 2 ist dabei durch zwei Umkehrbiegungen 3, 4 zu einem geschlossenen Trennrahmen 5 mit einem oberen Holm 6 und einem unteren Holm 7 gebogen. Die vordere Umkehrbiegung 4 geht in eine Konterbiegung 8 über, wodurch sich vor dieser Konterbiegung 8 eine vorteilhafte Kopffreiheit des in dem Bereich 9 liegenden Tieres ergibt.

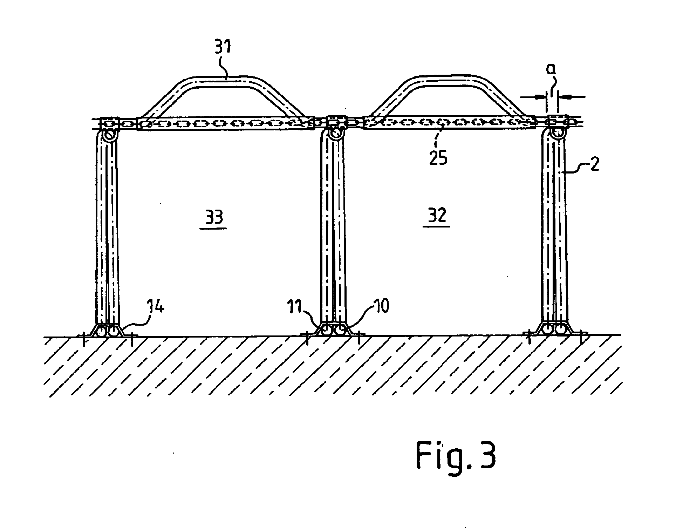

Die Endbereiche des Rohres 2 sind zu Abstützrohren 10, 11 (vgl. Figur 3) ausgebildet. In der Ausführungsform gemäß Figur 1 und 3 gehen die Abstützrohre 10, 11 über einen Vertikalabschnitt 12 in einen Horizontalabschnitt 13 über, wo sie mit einem Befestigungsbügel 14 am Boden mit Verschraubungen 15 befestigt sind.

Ein Bugholz 16 ist an der Vorderseite der durch die Abtrennvorrichtung 1 gebildeten Liegebox 17 an die Abstützrohren 10, 11 angefügt und begrenzt den durch Einstreu 18 abgedeckten Liegebereich 19 der Liegebox 17. Das Bugholz 16 ist durch einen Befestigungswinkel fixiert. Durch das Bugholz 16 oder eine andere vergleichbare Abgrenzung werden die Tiere am Vorwärtstreten gehindert, so dass sie in der Regel im Liegebereich bleiben. Zudem wird durch das Bugholz die Einstreu im Liegebereich zurückgehalten. Gegebenenfalls kann eine entsprechende Abgrenzung z.B. in Form eines Holzes auch auf der Hinterseite des Liegebereichs angebracht werden.

Oberhalb des Trennrahmens 5 ist ein Aussteifungs- und Begrenzungsrohr 21 mittels Bogenschrauben 22 und einer Spannschelle am oberen Holm 6 des Trennrahmens 5 fixiert. An der Spannschelle 23 ist eine Öse 24 befestigt, durch die eine Kette 25 als flexible Nackenabgrenzung gefädelt ist. Die Kette 25 ist mit einem schlauchförmigen Mantel 26 zur Schonung des damit in Berührung kommenden Tieres versehen.

Die Ausführung gemäß Figur 2 entspricht im Wesentlichen der Ausführung gemäß Figur 1, wobei nunmehr jedoch abweichend die Abstützrohre 27 im Wesentlichen vertikal enden. Hierdurch kann ein Tier, das trotz aller Gegenmaßnahmen in den Bereich vor dem Liegebereich 9 unter der Nackenbegrenzung hindurchschlüpft, sich freier bewegen, ohne über horizontale Rohrenden laufen zu müssen. Die Abstützrohre 27 sind in eine Halterungsmuffe 28 eingesteckt, die ihrerseits an dem Befestigungswinkel 29 am Boden fixiert ist. Der Befestigungswinkel 29 dient zudem dazu, das Bugholz 16 wie oben angeführt zu fixieren. In einer anderen Ausführung werden an der bzw. den Halterungsmuffen 28 Ohren bzw. Ösen angebracht, um das Bugholz 16 oder eine sonstige Abgrenzung zu befestigen.

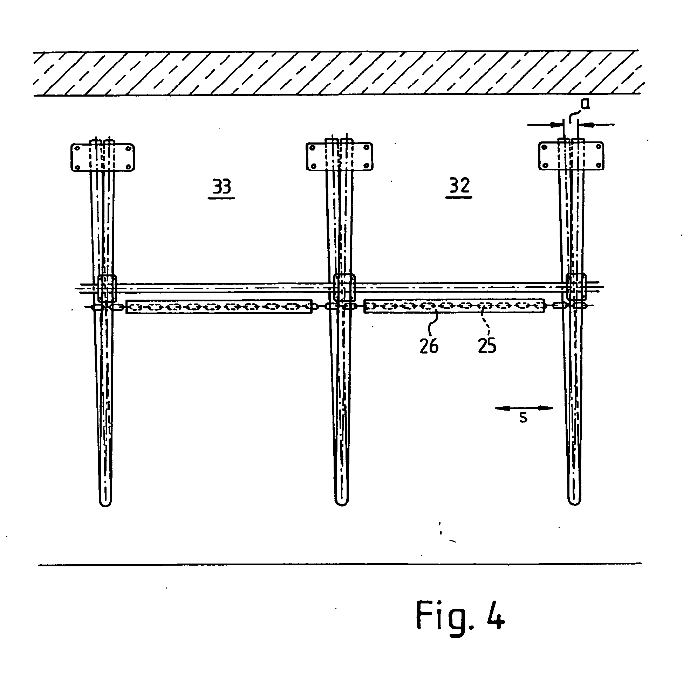

In beiden Ausführungen ist das Rohr 2 im Bereich der Umkehrbiegung 3 so gebogen, dass sich ein Seitenversatz a zumindest im Bereich der Rohrenden, d.h. der Abstützrohre 10, 11 bzw. 27 ergibt. Insbesondere in den Figuren 3 und 4 ist dieser Seitenversatz a gut ersichtlich.

Durch diese Anordnung der Abstützrohre 10, 11 bzw. 27 auf gleicher Höhe bezogen auf die Längsrichtung L der Abtrennvorrichtungen 1 ist in Verbindung mit dem Übergangsbug 30 vom Abstützrohr 10, 11, 27 zum unteren Holm 7 bzw. zur Konterbiegung 8 des Trennrahmens 5 eine besonders gute federnde Stabilität der Abtrennung 1 zu erzielen. Insbesondere im Bereich des Übergangsbugs 30 kann die Abtrennvorrichtung ohne wesentliche Verformung des Trennrahmens 5 federnd nachgeben, so dass sich eine gewisse Beweglichkeit des Trennrahmens 5 in Richtung h ergibt. Auch in Seitenrichtung s (vgl. Figur 4) ist eine federnde Nachgiebigkeit durch Verwindung der Abstützrohre 10, 11 bzw. 27 sowie durch ein gewisses Biegeverhalten des Trennrahmens 5 in Querrichtung gewährleistet.

Durch das Formen der Abtrennvorrichtung 1 aus einem Rohr am Stück sind Schweißnähte oder sonstige Verbindungsstellen gänzlich vermieden. Hierdurch ist die Bruchgefahr der Trennvorrichtung erheblich reduziert.

Durch die Form der verschiedenen Biegungen, insbesondere der Abstützrohre 10, 11, 27 in Verbindung mit dem Übergangsbug 30 ergibt sich eine extreme federnde Stabilität. Am hinteren Ende der Abtrennvorrichtung 1 bzw. des Trennrahmens 5 sind Federwege 100 mm ohne bleibende Verformung mit herkömmlichem Stahl möglich. Durch die parallele Führung der Abstützrohre 10, 11 wird diese federnde Stabilität weiter verbessert.

Die erfindungsgemäße Abtrennvorrichtung ermöglicht durch entsprechende Biegungen die Anordnung eines ausreichenden Freiraums für Kopfbewegungen. Die Kombination mit einer flexiblen Nackenbegrenzung 24 gewährt dem Tier zudem einen ausreichenden Bewegungsfreiraum zur Ausübung des Kopf-Halsschwungs beim Aufstehen und verhindert zugleich das Vortreten vor den Liegebereich 19 und somit das Verkoten der Liegebox.

Das Aussteifungs- und Abgrenzungsrohr weist eine besondere Auswölbung 31 auf, wodurch die durch das Aussteifungs- und Abgrenzungsrohr gebildete Nackenbegrenzung vollständig außerhalb des Bewegungsbereichs beim Aufstehschwung der Tiere liegt. Die nötige Fixierung der Tiere zur Verhinderung der Verschmutzung des Liegebereichs 19 wird durch die flexible Nackenbegrenzung in Form der Kette 25 oder anderen Zugelementen, beispielsweise eines Nylonbandes gewährleistet.

Diese flexible Abgrenzung, kombiniert mit dem nach oben gewonnenen Freiraum durch das gewölbte Aussteifungs- und Abgrenzungsrohr 21 erlaubt Tieren mit unterschiedlicher Größe, den Kopf-Halsschwung beim Aufstehvorgang verletzungsfrei durchzuführen. Auch eine Anpassung der Abtrennvorrichtung an verschiedene Tiergrößen ist möglich, indem das Aussteifungs- und Begrenzungsrohr 21 in seinem Anstellwinkel und/oder in seiner Position in Längsrichtung L verstellt wird. Dabei wird zugleich auch die Nackenabgrenzung, die durch die Ösen 24 und die Kette 25 gebildet wird, mit verstellt.

In den Figuren 3 und 4 sind Stallbereiche dargestellt, in denen durch nebeneinander angeordnete Abtrennvorrichtungen 5 mehrere Liegeboxen 32, 33 gebildet werden. In diesen Darstellungen ist die Verbindung mit den einzelnen Abtrennvorrichtungen durch das Aussteifungs- und Begrenzungsrohr 21 erkennbar.

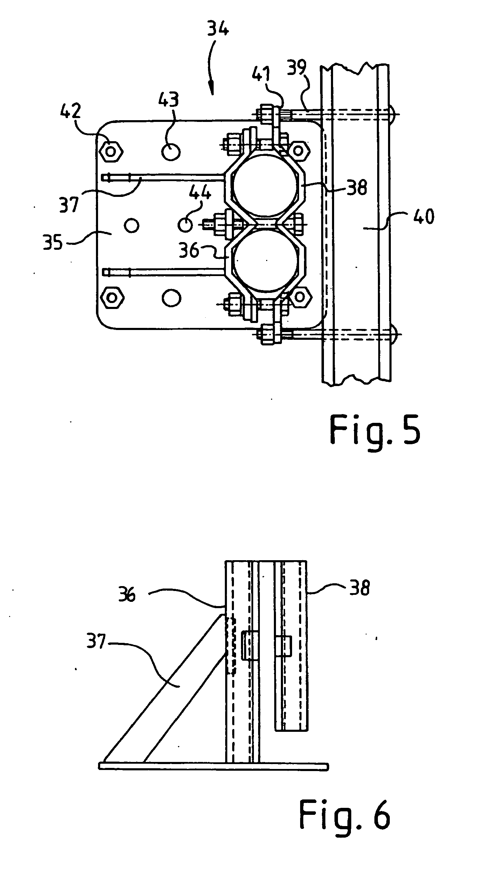

Figur 5 zeigt eine Montagekonsole 34 zur Bodenmontage erfindungsgemäßer Abtrennvorrichtungen 1. Eine Bodenplatte 35 trägt eine Halteplatte 36, die über schräg verlaufende Verstrebungen 37 in der vertikalen Ausrichtung abgestützt ist. Die Halteplatte 36 sowie die Verstrebungen 37 sind dabei fest mit der Bodenplatte 35 verbunden, beispielsweise verschweißt. Über eine Klemmplatte 38 lassen sich Abstützrohre 27 der Abtrennvorrichtung 1 nach Art einer Halbschalenkupplung mit Spannschrauben 39 fixieren.

Ein Bugholz 40 kann dabei in entsprechenden Seitenlaschen 41 der Klemmplatte 38 an der Klemmplatte 38 verschraubt werden. In der Darstellung gemäß Figur 5 ist das Bugholz noch beabstandet von der Klemmplatte 38 angeordnet. Nach dem Anziehen der Spannschrauben 39 liegt das Bugholz an der Klemmplatte 38 an (nicht näher dargestellt).

Die Bodenplatte 35 kann über Schwerlastanker, die bodenseitig angebracht, beispielsweise in Beton eingegossen sind, befestigt werden. In der Darstellung gemäß Figur 5 sind Schraubenmuttern 42 zum Verschrauben der Bodenplatte 35 an solchen Schwerlastankern dargestellt.

Eine alternative Bodenbefestigung ist über die zusätzlichen Schraubenlöcher 43, 44 möglich. Durch diese Löcher 43, 44 können Fixierschrauben zur Befestigung der Bodenplatte 35 beispielsweise an bodenseitigen Ankerplatten mit entsprechenden Innengewinden oder mit Dübeln in entsprechenden Bohrungen von Betonplatten oder dergleichen eingeführt werden.

Durch die Vielzahl der zur Verfügung stehenden Löcher oder Bohrungen in der Bodenplatte 35 besteht darüber hinaus eine Ausweichmöglichkeit, falls bodenseitig ein Hindernis, z.B. ein Stein, ein Armierungsstahl oder dergleichen auftritt. In diesem Fall kann durch Verwendung eines benachbarten Lochs 43, 44 einem solchen Hindernis ausgewichen werden.

### Bezugszeichenliste:

- 1: Abtrennvorrichtung
- 2: Rohr
- 3: Umkehrbiegung
- 4: Umkehrbiegung
- 5: Trennrahmen
- 6: Oberer Holm
- 7: Unterer Holm
- 8: Konterbiegung
- 9: Bereich
- 10: Abstützrohr
- 11: Abstützrohr
- 12: Vertikalschnitt
- 13: Horizontalschnitt
- 14: Befestigungsbügel
- 15: Verschraubung
- 16: Bugholz
- 17: Liegebox
- 18: Einstreu
- 19: Liegebereich
- 20: Befestigungswinkel
- 21: Aussteifungs- und Abgrenzrohr
- 22: Bogenschraube
- 23: Spannschelle
- 24: Öse
- 25: Kette
- 26: Mantel
- 27: Abstützrohr
- 28: Halterungsmuffe
- 29: Befestigungswinkel
- 30: Übergangsbug
- 31: Auswölbung
- 32: Liegebox
- 33: Liegebox
- 34: Montagekonsole
- 35: Bodenplatte
- 36: Halteplatte
- 37: Verstrebung
- 38: Klemmplatte
- 39: Spannschraube
- 40: Bugholz
- 41: Seitenlasche
- 42: Schraubenmutter
- 43: Schraubenloch
- 44: Schraubenloch

## Patentansprüche

1. Abtrennvorrichtung für Stallboxen zur Haltung von Tieren wie Kühen, Rindern, Schweinen oder dergleichen mit einem Trennrohr und zwei Abstützrohren für die Bodenbefestigung, wobei die beiden Abstützrohre (10, 11) durch die Endbereiche und das Trennrohr durch den dazwischen liegenden Rohrbereich des einstückig gebogenen Rohres (2) gebildet sind, das Trennrohr (5) wenigstens eine Umkehrbiegung (3, 4) aufweist und zu einem Trennrahmen (5) oder Trennbügel gebogen ist, so dass es wenigstens zwei voneinander beabstandete, auf unterschiedlichen Höhen liegenden Holme (6, 7) aufweist, wobei ein Seitenversatz (a) für die Abstützrohre (10, 11) durch entsprechende Biegung des einstückigen Rohres (2) vorgesehen ist, **dadurch gekennzeichnet, dass** die Enden der jeweils gleich langen Abstützrohre (10, 11) im Bereich einer bodenseitigen Halterung (14) nebeneinander angeordnet sind.

2. Vorrichtung nach einem der vorgenannten Ansprüche, **dadurch gekennzeichnet, dass** das Trennrohr (5) und das Abstützrohr umfassende gebogene Rohr (2) eine nachgiebige Form aufweist (10, 11).

3. Vorrichtung nach einem der vorgenannten Ansprüche, **dadurch gekennzeichnet, dass** zwei oder mehr Abstützrohre (10, 11) vorgesehen sind.

4. Vorrichtung nach einem der vorgenannten Ansprüche,
**dadurch gekennzeichnet, dass** das Trennrohr (3) und ein Abstützrohr (10, 11) in einer Ebene liegen.

5. Vorrichtung nach einem der vorgenannten Ansprüche, **dadurch gekennzeichnet, dass** die beiden Abstützrohre (10, 11) unmittelbar benachbart angeordnet sind.

6. Vorrichtung nach einem der vorgenannten Ansprüche, **dadurch gekennzeichnet, dass** die bodenseitige Halterung eine Klemm- und/oder Steckhalterung (28) ist.

7. Vorrichtung nach einem der vorgenannten Ansprüche, **dadurch gekennzeichnet, dass** die bodenseitige Halterung wenigstens eine Klemm- und/oder Steckhülse (28) umfasst.

8. Vorrichtung nach einem der vorgenannten Ansprüche, **dadurch gekennzeichnet, dass** die bodenseitige Befestigung (28) außerhalb des durch den Trennrahmen gebildeten Liegebereichs (9) vorgesehen ist.

9. Vorrichtung nach einem der vorgenannten Ansprüche, **dadurch gekennzeichnet, dass** das ein Abstützrohr (27) bildende Rohrende im Wesentlichen vertikal verläuft.

10. Vorrichtung nach einem der vorgenannten Ansprüche, **dadurch gekennzeichnet, dass** das ein Abstützrohr (10, 11) bildende Rohrende im Wesentlichen horizontal verläuft.

11. Vorrichtung nach einem der vorgenannten Ansprüche, **dadurch gekennzeichnet, dass** eine vordere Begrenzung (16) der Liegefläche (9) an den Abstützrohren vorgesehen ist.

12. Vorrichtung nach einem der vorgenannten Ansprüche, **dadurch gekennzeichnet, dass** eine Nackenbegrenzung (25) vorgesehen ist.

13. Vorrichtung nach einem der vorgenannten Ansprüche, **dadurch gekennzeichnet, dass** die Nackenbegrenzung (25) flexibel ist.

14. Vorrichtung nach einem der vorgenannten Ansprüche, **dadurch gekennzeichnet, dass** die Nackenbegrenzung (25) verstellbar ist.

15. Stall für Tiere wie Kühe, Rinder, Schweine oder dergleichen, **dadurch gekennzeichnet, dass** eine Abtrennvorrichtung (1) gemäß einem der vorgenannten Ansprüche vorgesehen ist.

## Claims

1. A partitioning device for livestock cubicles for the husbandry of animals such as cows, cattle, swine, or the like, comprising a partitioning tube and two supporting tubes for anchorage thereof to the ground, wherein the two supporting tubes (10, 11) are formed by the end regions, and the partitioning tube by the intermediate region, of the single-piece bent tube (2), and the partitioning tube (5) has at least one reverse bend (3, 4) and is bent to form a partitioning frame (5) or partitioning U-frame such that it has at least two spaced cross beams (6, 7) located at different levels, and a lateral offset (a) is provided for the supporting tubes (10, 11) by appropriate bending of said single-piece tube (2), **characterized in that** the ends of the equally long supporting tubes (10, 11) are juxtaposed in the region of the anchoring means (14) on the ground.

2. The device as defined in claim 1, **characterized in that** the partitioning tube (5) and the bent tube (2) comprising the supporting tube (10, 11) has a resilient design.

3. The device as defined in any one of the aforementioned claims, **characterized in that** two or more supporting tubes (10, 11) are provided.

4. The device as defined in any one of the aforementioned claims, **characterized in that** the partitioning tube (3) and a supporting tube (10, 11) are in one plane.

5. The device as defined in any one of the aforementioned claims, **characterized in that** the two supporting tubes (10, 11) are directly juxtaposed.

6. The device as defined in any one of the aforementioned claims, **characterized in that** the ground anchorage is a clamping and/or plug-type fixture (28).

7. The device as defined in any one of the aforementioned claims, **characterized in that** the ground anchorage comprises at least one clamping and/or plug-type sleeve (28).

8. The device as defined in any one of the aforementioned claims, **characterized in that** said ground anchor (28) is provided outside said lie-down area (9) formed by said partitioning frame.

9. The device as defined in any one of the aforementioned claims, **characterized in that** the tube end forming said supporting tube (27) extends substantially vertically.

10. The device as defined in any one of the aforementioned claims, **characterized in that** the tube end forming a supporting tube (10, 11) extends substantially horizontally.

11. The device as defined in any one of the aforementioned claims, **characterized in that** a front delimitation (16) of said lie-down area (9) is provided on said supporting tubes.

12. The device as defined in any one of the aforementioned claims, **characterized in that** a neck restraint (25) is provided.

13. The device as defined in any one of the aforementioned claims, **characterized in that** said neck restraint (25) is resilient.

14. The device as defined in any one of the aforementioned claims, **characterized in that** said neck restraint (25) is adjustable.

15. A pen for animals such as cows, cattle, swine or the like, **characterized in that** a partitioning device as defined in any one of the previous claims is provided.

## Revendications

1. Dispositif de séparation pour stalles destiné à la stabulation d'animaux tels que vaches, boeufs, porcs ou autres animaux similaires, comprenant un tube de séparation et deux tubes d'appui pour la fixation au sol, les deux tubes d'appui (10, 11) étant constitués par les zones d'extrémité et le tube de séparation étant constitué par la zone de tube située entre ces dernières du tube d'un seul tenant courbé (2), le tube de séparation (5) présentant au moins une courbure inversée (3, 4) et étant courbé de manière à former un cadre de séparation (5) ou une bride de séparation, de telle sorte qu'il comporte au moins deux barres (6, 7) espacées l'une de l'autre et situées à différentes hauteurs, un décalage latéral (a) réalisé par torsion appropriée du tube d'un seul tenant (2) étant prévu pour les deux tubes d'appui (10, 11), **caractérisé en ce que** les extrémités des tubes d'appui (10, 11) respectivement de même longueur sont agencées côte à côte dans la zone d'un support côté sol (14).

2. Dispositif selon la revendication 1, **caractérisé en ce que** le tube courbé (2) comprenant le tube de séparation (5) et le tube d'appui présente une forme souple (10, 11).

3. Dispositif selon une des revendications précédentes, **caractérisé en ce que** deux ou plusieurs tubes d'appui (10, 11) sont prévus.

4. Dispositif selon une des revendications précédentes, **caractérisé en ce que** le tube de séparation (3) et un tube d'appui (10, 11) se trouvent dans un même plan.

5. Dispositif selon une des revendications précédentes, **caractérisé en ce que** les deux tubes d'appui (10, 11) sont agencés de telle manière qu'ils sont directement voisins l'un de l'autre.

6. Dispositif selon une des revendications précédentes, **caractérisé en ce que** le support côté sol est un support à serrage et/ou à emboîtement (28).

7. Dispositif selon une des revendications précédentes, **caractérisé en ce que** le support côté sol comprend au moins une douille de serrage et/ou d'emboîtement (28).

8. Dispositif selon une des revendications précédentes, **caractérisé en ce que** la fixation (28) côté sol est prévue à l'extérieur de la zone de repos (9) constituée par le cadre de séparation.

9. Dispositif selon une des revendications précédentes, **caractérisé en ce que** l'extrémité de tube constituant un tube d'appui (27) a un tracé essentiellement vertical.

10. Dispositif selon une des revendications précédentes, **caractérisé en ce que** l'extrémité de tube constituant un tube d'appui (10, 11) a un tracé essentiellement horizontal.

11. Dispositif selon une des revendications précédentes, **caractérisé en ce qu'**une limitation antérieure (16) de la surface de repos (9) est prévue aux tubes d'appui.

12. Dispositif selon une des revendications précédentes, **caractérisé en ce qu'**une limitation au niveau de la nuque (25) est prévue.

13. Dispositif selon une des revendications précédentes, **caractérisé en ce que** la limitation au niveau de la nuque (25) est flexible.

14. Dispositif selon une des revendications précédentes, **caractérisé en ce que** la position de la limitation au niveau de la nuque (25) est modifiable.

15. Etable pour animaux tels que vaches, boeufs, porcs ou autres animaux similaires, **caractérisée en ce qu'**un dispositif de séparation selon une des revendications précédentes (1) est prévu.
